(19) Europäisches Patentamt / European Patent Office / Office européen des brevets

(11) **EP 4 020 034 A1**

(12) **EUROPEAN PATENT APPLICATION**

(43) Date of publication:
**29.06.2022 Bulletin 2022/26**

(21) Application number: **21196244.4**

(22) Date of filing: **13.09.2021**

(51) International Patent Classification (IPC):
*G02B 6/38* (2006.01)

(52) Cooperative Patent Classification (CPC):
**G02B 6/3849; G02B 6/3885**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.12.2020 US 202017131630**

(71) Applicant: **Intel Corporation**
**Santa Clara, CA 95054 (US)**

(72) Inventors:
• **WALCZYK, Joe**
  **Tigard, 97224 (US)**
• **COONS, Todd**
  **Hillsboro, 97124 (US)**
• **RUTIGLIANO, Michael**
  **Hillsboro, 97124 (US)**
• **DETOFSKY, Abram**
  **Tigard, 97223 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **PIERCEABLE PROTECTIVE COVER FOR PHOTONIC CONNECTORS**

(57) A photonic connector comprises a first ferrule having a first plurality of optical fibers. A membrane cover is attached to the first ferrule and covers ends of the first plurality of optical fibers. Once the first ferrule is mated with a second ferrule having a second plurality of optical fibers, the membrane cover is pierced by the first plurality of optical fibers, the second plurality of optical fibers, or both.

**FIG. 3A**

**FIG. 3B**

EP 4 020 034 A1

## Description

## TECHNICAL FIELD

Embodiments of the disclosure are in the field of semiconductor packages and, in particular, a pierceable protective cover for photonic connectors.

## BACKGROUND

Fiber optic transmission relies on low loss optical fibers and high fidelity fiber-to-fiber mating between the optical fibers in photonic connectors for acceptable performance. The fiber-to-fiber mating is critical and is typically resolved through precision fiber end geometries as well as precision connector ferrule designs to mitigate alignment tolerances. Both can be resolved through advance design and manufacturing principles, however, there is one factor that is difficult to design out -- foreign material. Introduction of foreign material between the optical fibers prevents an optical path from completing.

Foreign material between the fibers requires a user to thoroughly clean the fibers before the connector ferrules are mated. This typically becomes an issue once high volume manufacturing requirements drive automated insertions where extra cleaning steps can require significant investments. In addition, for large datacenter type applications that are increasingly turning to optical transmission, manual cleaning of the fibers in connector ferrules is error prone and could introduce significant serviceability issues in the field. Protective caps attached to tips of the ferrules are effective to prevent foreign material during transport, but the caps need to be removed prior to mating and do not prevent foreign material from entering the ferrules and blocking the mating fibers during mating.

## BRIEF DESCRIPTION OF THE DRAWINGS

Figure 1A illustrates an angled view of a photonic connector.
Figure 1B illustrates a cross-section view of ferrules and prior to mating.
Figure 1C illustrates a cross-section view of the ferrules and after mating in which ferrule is inserted fully inside a cavity of ferrule.
Figure 2 illustrates a top view of an optoelectronic multi-chip module with an integrate fiber connector as another example where photonic connectors can be used.
Figures 3A and 3B illustrate cross-section view of a photonic connector equipped with a protective membrane cover in accordance one embodiment.
Figure 4 is an angled view of the first ferrule in an embodiment where the membrane cover may be attached to the front face of the first ferrule over at least the ends of the first plurality of optical fibers between the alignment pins.
Figures 5A-5D illustrate cross-section view of a photonic connector equipped with a protective membrane cover in accordance with other embodiments.
Figure 6 illustrates a flow diagram of a process for fabricating the photonic connector according to one embodiment.
Figure 7 illustrates a computing device in accordance with one implementation of the disclosure.

## DESCRIPTION OF THE EMBODIMENTS

A pierceable protective cover for photonic connectors is described. In the following description, numerous specific details are set forth, such as specific material and tooling regimes, in order to provide a thorough understanding of embodiments of the present disclosure. It will be apparent to one skilled in the art that embodiments of the present disclosure may be practiced without these specific details. In other instances, well-known features, such as single or dual damascene processing, are not described in detail in order to not unnecessarily obscure embodiments of the present disclosure. Furthermore, it is to be understood that the various embodiments shown in the Figures are illustrative representations and are not necessarily drawn to scale. In some cases, various operations will be described as multiple discrete operations, in turn, in a manner that is most helpful in understanding the present disclosure, however, the order of description should not be construed to imply that these operations are necessarily order dependent. In particular, these operations need not be performed in the order of presentation.

Certain terminology may also be used in the following description for the purpose of reference only, and thus are not intended to be limiting. For example, terms such as "upper", "lower", "above", "below," "bottom," and "top" refer to directions in the drawings to which reference is made. Terms such as "front", "back", "rear", and "side" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import.

One or more embodiments described herein are directed to a pierceable protective cover for a photonic connector. The photonic connector comprises a first ferrule having a first plurality of optical fibers. A membrane cover is attached to the first ferrule and covers ends of the first plurality of optical fibers. Once the first ferrule is mated with a second ferrule having a second plurality of optical fibers, the membrane cover is pierced by the first plurality of optical fibers, the second plurality of optical fibers, or both to keep the first and second plurality of optical fibers free from debris. Embodiments may include or pertain to one or more of optical cables, mechanical transfer (MT) ferrules, and optoelectronic multi-chip modules (photonic die plus logic die), system-on-chip (SoC), and data center technologies that have integrated photonic connections.

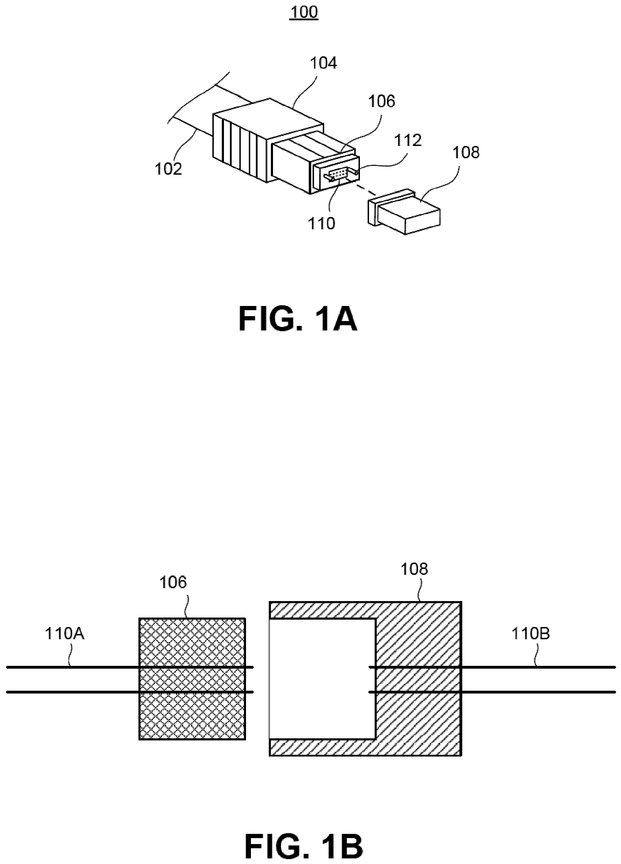

To provide context, Figures 1A-1C illustrates an example of a standard fiber or photonic connector. Figure 1A illustrates an angled view of the photonic connector 100. The fiber connector 100 typically includes a fiber optic cable 102 connected to a housing 104, and a ferrule 106 attached to the housing 104 that mates with ferrule 108. There are different types of ferrules including a mechanical transfer (MT) ferrule and a multi-fiber push on (MPO) ferrule. In the embodiment shown, ferrules 106 and 108 may comprise an MT ferrule, which have a multi-fiber core 110, typically 12 or 16 pins arranged in two rows optical fibers. As with most type of connectors, ferrules 106 and 108 can be either male or female. Ferrule 106 is male and can be identified as such by two alignment pins 112 protruding from the end of the ferrule 106. Ferrule 108 is female and includes a cavity where the back wall of the cavity (see Figure 1B) has a set of holes to accept the alignment pins 112 from male ferrule 106.

Figure 1B illustrates a cross-section view of the ferrules 106 and 108 prior to mating. Two rows of optical fibers 110A and 110B are shown slightly protruding from ferrules 106 and 108, respectively. In the embodiment shown, ferrule 106 is inserted into ferrule 108 during mating.

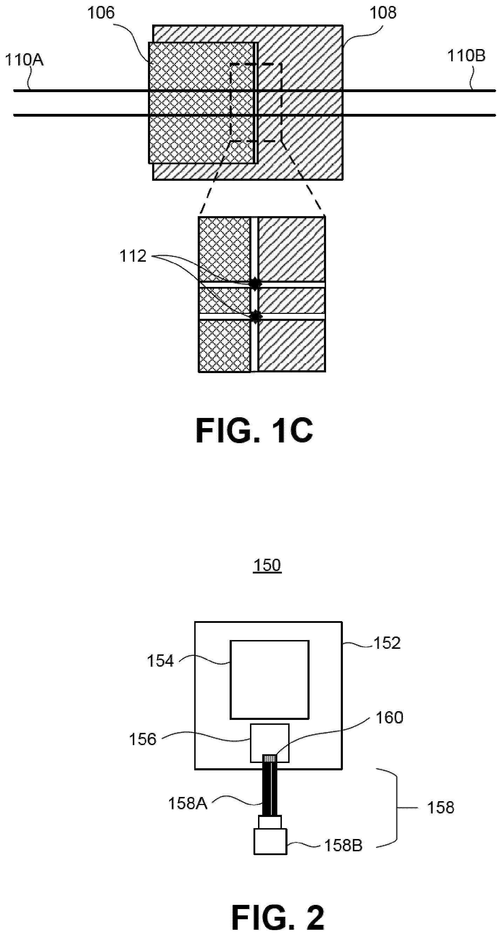

Figure 1C illustrates a cross-section view of the ferrules 106 and 108 after mating in which ferrule 106 is inserted fully inside a cavity of ferrule 108. Once ferrule 106 and 108 are mated, the optical fibers 110A and 110B from both ferrules 106 and 108 are aligned with one another and physically contact. An enlarged section of Figure 1C shows that debris 112 can be trapped in-between the optical fibers 110A and 110B of the mated ferrules 106 and 108.

Figure 2 illustrates a top view of an optoelectronic multi-chip module with an integrate fiber connector as another example where photonic connectors can be used. The optoelectronic multi-chip module 150 includes a logic die 154 mounted to a substrate 152. The substrate 152 may be an organic substrate or a ceramic substrate. A photonic die 156 is mounted on the substrate 152 and is connected to the logic die 154 through the substrate 152 or an embedded multi-die interconnect bridge (EMIB). The photonic die 156 is also connected to external components through a photonic connector 158 comprising an optical fiber array 158A and corresponding ferrule 158B. The optical fibers comprising the fiber array 158A may be received into the photonics die 156 by a V-groove array 160 or other type of receptacle.

Photonic connectors, such as fiber connectors 100 and 158, are becoming increasingly used in optoelectronic multi-chip modules and in high-density networks and data centers. Unfortunately, uncleanliness of the fiber connectors 100 and 158 have become a common cause of network failure. Even if the ferrules 106, 108 or 158B are cleaned prior to making the connection, improper cleaning may hamper performance. Cleaning of photonic connectors is complicated by the fact that photonic connectors have multiple fibers with a wide contact surface, and any dirt on one fiber can cause signal degradation in the rest of the fibers in the connector. Not only is manual cleaning error prone, it is also time-consuming and can increase cost. Protective dust caps placed over the ends of the ferrules 106, 108 or 158B may be effective to prevent debris during transport, but the dust caps need to be removed prior to mating, allowing debris to access tips of the optical fibers 110A, 110B and 158A in ferrules 106, 108 or 158B, respectively.

In accordance with one or more embodiments described herein, an integrated protective membrane cover is applied to photonic connectors to keep the optical fibers free from debris. The protective membrane cover shields the ends of the optical fibers during and after transport. When a first ferrule is inserted into a second ferrule during mating, the protective membrane is pierced by the optical fibers of one or both of the ferrules and any debris on the optical fibers is wiped clean by the protective membrane cover.

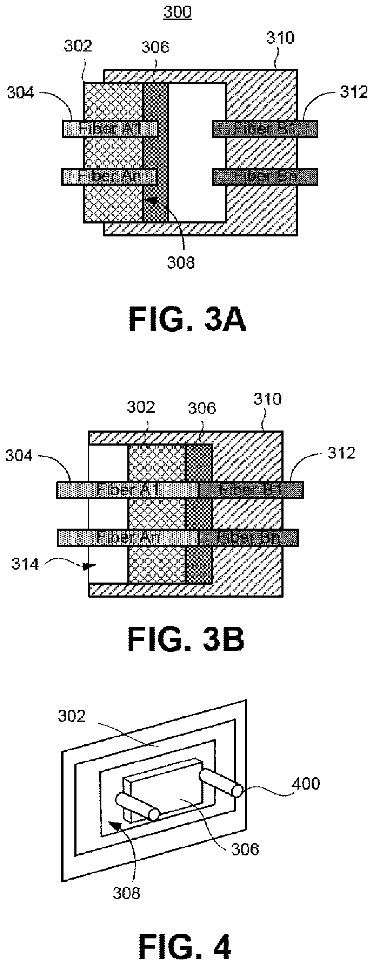

Figures 3A and 3B illustrate cross-section view of a photonic connector equipped with a protective membrane cover in accordance one embodiment. The photonic connector 300 comprises a first ferrule 302 having a first plurality of optical fibers 304. A membrane cover 306 is attached to the first ferrule 302 and covers ends of the first plurality of optical fibers 304.

Figure 3B shows that once the first ferrule 302 is mated with a second ferrule 310 having a second plurality of optical fibers 312 and the first ferrule 302 is inserted fully inside a cavity 314 of ferrule 310, the membrane cover 306 is pierced by the first plurality of optical fibers 304, the second plurality of optical fibers 312, or both. Figure 3B shows an embodiment where both the first plurality of optical fibers 304 and the second plurality of optical fibers 312 pierce the membrane cover 306 in alignment with one another and in physical contact. However, in other embodiments, only the first plurality of optical fibers 304 may pierce all the way through the membrane cover 306 to reach the second plurality of optical fibers 312; or only the second plurality of optical fibers 312 may pierce all the way through the membrane cover 306 to reach the first plurality of optical fibers 304.

The membrane cover 306 prevents any debris from impinging on the first plurality of optical fibers 304 and the second plurality of optical fibers 312 as piercing of the membrane cover 306 causes any debris to be removed from second plurality of optical fibers 312.

As shown in Figures 3A and 3B, the first ferrule 302 is a male connector and the membrane cover 306 is attached to a front face 308 of the first ferrule 302 over the ends of the first plurality of optical fibers 304. Figures 3A and 3B further show an embodiment where the first plurality of optical fibers 304 extend past the front face 308 sufficiently to pierce the membrane cover 306.

In another embodiment, the first plurality of optical fibers 304 may not extend past the front face 308 a sufficient distance to pierce the membrane cover 306. That is, the first plurality of optical fibers 304 may be polished flat so only 1-3 um of the first plurality of optical fibers 304 protrude from the first ferrule 302.

Figure 4 is an angled view of the first ferrule 302 in an embodiment where the membrane cover 306 may be attached to the front face 308 of the first ferrule 302 over at least the ends of the first plurality of optical fibers 304 between the alignment pins 400. In another embodiment, the membrane cover 306 may attached to the front face 308 over both the ends of the first plurality of optical fibers 304 and the alignment pins 400. In other embodiments, the membrane cover 306 may extend only over the first plurality of optical fibers 304, or may extend vertically to a top and bottom of the first ferrule 302.

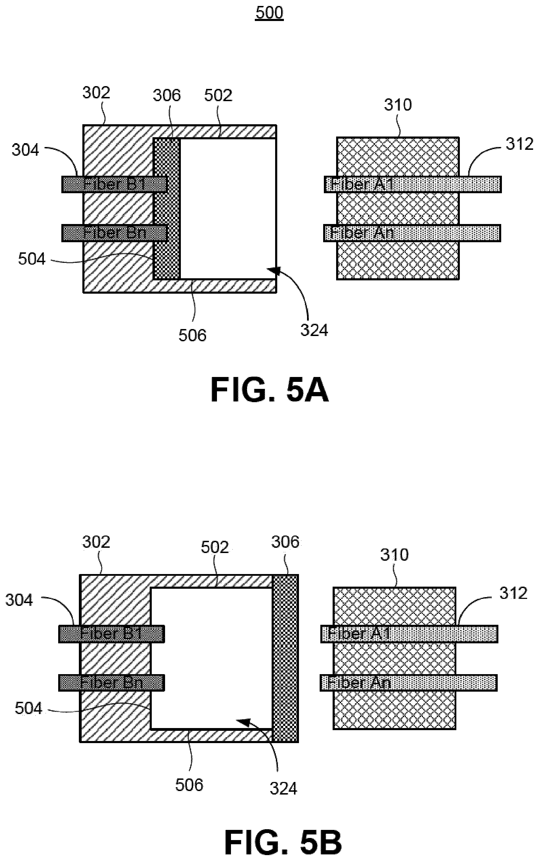

Figures 5A-5D illustrate cross-section view of a photonic connector equipped with a protective membrane cover in accordance with other embodiments. Figure 5A shows a photonic connector 500 an embodiment where the first ferrule 302 comprises a female connector having a top wall 502, a back wall 504 and bottom wall 506 that form a cavity 324. In this embodiment, the membrane cover 306 is attached to the back wall 504 of the cavity 324 over the ends of the first plurality of optical fibers 304. Once the first ferrule 302 is mated with the second ferrule 310, the result is as shown in Figure 3B.

Figure 5B shows an embodiment of the photonic connector 500 where the membrane cover 306 is attached to the first ferrule 302 over front surfaces of the top wall 502, a back wall 504 and bottom wall 506 and over the cavity 324.

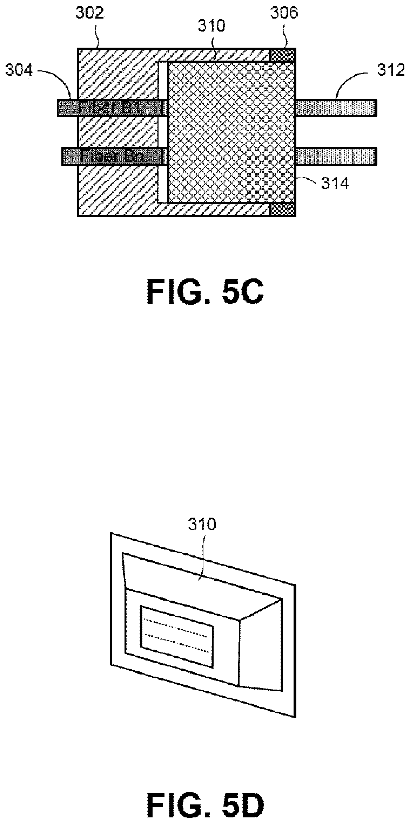

Figure 5C shows that once the first ferrule 302 and the second ferrule 310 are mated, the second ferrule 310 is inserted into the cavity 324 of the first ferrule 302 and the second plurality of optical fibers 312 pierce and tear the membrane cover 306.

Figure 5D illustrates an angle view of the second ferrule 310 showing that in one embodiment, the front face of the second ferrule 310 may have a wedge shape, rather than a flat face, to aid in tearing the membrane cover 306 on the first ferrule 302 of Figures 5A-5C.

In one embodiment, the membrane cover 306 may comprise a self-healing polymer material for repeated use. In another embodiment, the membrane cover 306 may comprise a traditional polymer material that tears upon being pierced. In another embodiment, the membrane cover 306 may comprise a closed cell foam material. In yet another embodiment, the membrane cover 306 may comprise a melamine foam material.

In one embodiment, the size of the membrane cover 306 is dependent upon size of the ferrule. However, in one embodiment, membrane cover 306 may have a height of approximately 8-10 mm and a width of approximately 20-30 mm. Tear resistance requirements can be defined as a function of allowed deformation, force, and cap thickness. In one embodiment, the displacement/deformation (Delta δ) of the membrane cover 306 may be computed by:

$$\frac{Pr^2}{16\pi D} = \frac{0.217 Pr^2}{E t^2}$$

where P = pressure, t = membrane thickness, r = radius of object penetration, D = flexural rigidity, v = Poisson ratio of the material, and E = modulus of the material.

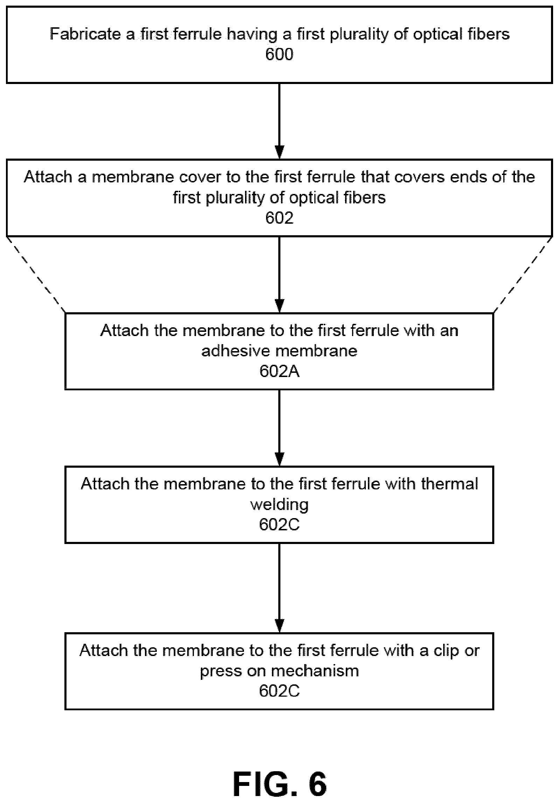

Figure 6 illustrates a flow diagram of a process for fabricating the photonic connector according to one embodiment. The first ferrule having a plurality of optical fibers is fabricated using standard processing techniques (block 600). The membrane cover is then attached to the first ferrule to cover ends of the first plurality of optical fibers (block 602). There are several embodiments for attaching the membrane cover. The membrane cover may be attached to the first ferrule with a suitable adhesive membrane (block 602A). The membrane cover may be attached to the first ferrule with thermal welding (block 602B). The membrane cover may be attached to the first ferrule with a clip or press on mechanism (block 602C).

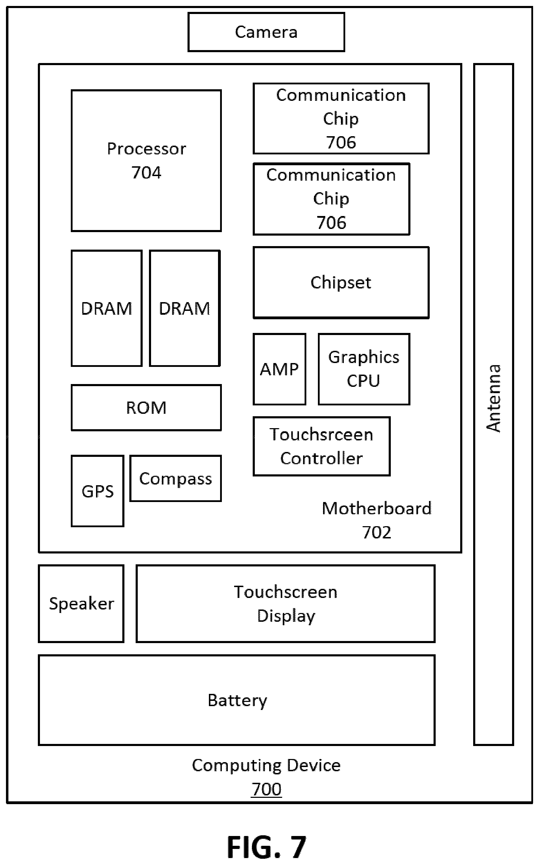

Figure 7 illustrates a computing device 700 in accordance with one implementation of the disclosure. The computing device 700 houses a board 702. The board 702 may include a number of components, including but not limited to a processor 704 and at least one communication chip 706. The processor 704 is physically and electrically coupled to the board 702. In some implementations the at least one communication chip 706 is also physically and electrically coupled to the board 702. In further implementations, the communication chip 706 is part of the processor 704.

Depending on its applications, computing device 700 may include other components that may or may not be physically and electrically coupled to the board 702. These other components include, but are not limited to, volatile memory (e.g., DRAM), non-volatile memory (e.g., ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as hard disk drive, compact disk (CD), digital versatile disk (DVD), and so forth).

The communication chip 706 enables wireless communications for the transfer of data to and from the computing device 700. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication chip 706 may implement any of a number of wireless standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device 700 may include a plurality of communication chips 706. For instance, a first communication chip 706 may be dedicated to shorter range wireless communications such as Wi-Fi and Bluetooth and a second communication chip 706 may be dedicated to longer range wireless communications such as GPS, EDGE, GPRS, CDMA, WiMAX, LTE, Ev-DO, and others.

The processor 704 of the computing device 700 includes an integrated circuit die packaged within the processor 704. In some implementations of the disclosure, the integrated circuit die of the processor includes one or more photonic connectors having a protective membrane cover, in accordance with implementations of embodiments of the disclosure. The term "processor" may refer to any device or portion of a device that processes electronic data from registers and/or memory to transform that electronic data into other electronic data that may be stored in registers and/or memory.

The communication chip 706 also includes an integrated circuit die packaged within the communication chip 706. In accordance with another implementation of embodiments of the disclosure, the integrated circuit die of the communication chip includes one or more photonic connectors having a protective membrane cover, in accordance with implementations of embodiments of the disclosure.

In further implementations, another component housed within the computing device 700 may contain an integrated circuit die that includes one or more photonic connectors having a protective membrane cover, in accordance with implementations of embodiments of the disclosure.

In various implementations, the computing device 700 may be a laptop, a netbook, a notebook, an ultrabook, a smartphone, a tablet, a personal digital assistant (PDA), an ultra mobile PC, a mobile phone, a desktop computer, a server, a printer, a scanner, a monitor, a set-top box, an entertainment control unit, a digital camera, a portable music player, or a digital video recorder. In further implementations, the computing device 700 may be any other electronic device that processes data.

Thus, embodiments described herein include photonic connectors having a protective membrane cover.

The above description of illustrated implementations of embodiments of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize.

These modifications may be made to the disclosure in light of the above detailed description. The terms used in the following claims should not be construed to limit the disclosure to the specific implementations disclosed in the specification and the claims. Rather, the scope of the disclosure is to be determined entirely by the following claims, which are to be construed in accordance with established doctrines of claim interpretation.

Example embodiment 1: A photonic connector comprises a first ferrule having a first plurality of optical fibers. A membrane cover is attached to the first ferrule and covers ends of the first plurality of optical fibers. Once the first ferrule is mated with a second ferrule having a second plurality of optical fibers, the membrane cover is pierced by the first plurality of optical fibers, the second plurality of optical fibers, or both.

Example embodiment 2: The photonic connector of embodiment 1, wherein the first ferrule comprises a male connector and the membrane cover is attached to a front face of the first ferrule over the ends of the first plurality of optical fibers between alignment pins.

Example embodiment 3: The photonic connector of embodiment 1 or 2, wherein the first ferrule comprises a male connector and the membrane cover is attached to a front face of the first ferrule over both the ends of the first plurality of optical fibers and the alignment pins.

Example embodiment 4: The photonic connector of embodiment 1, 2 or 3, wherein the first ferrule comprises a male connector and the first plurality of optical fibers extend past the front face sufficiently to pierce the membrane cover.

Example embodiment 5: The photonic connector of embodiment 1, 2, 3 or 4, wherein the first ferrule comprises a male connector and the first plurality of optical fibers do not extend past the front face sufficiently to pierce the membrane cover.

Example embodiment 6: The photonic connector of embodiment 1, wherein the first ferrule comprises a female connector having a top wall, a back wall, and a bottom wall that form a cavity in the first ferrule, wherein the membrane cover is attached to the back wall of the cavity over the ends of the first plurality of optical fibers.

Example embodiment 7: The photonic connector of embodiment 1, wherein the first ferrule comprises a female connector having a top wall, a back wall, and a bottom wall that form a cavity, wherein the membrane cover is attached to front surfaces of the top, the sides and the bottom walls over the cavity.

Example embodiment 8: The photonic connector of embodiment 7, wherein once the first ferrule is mated with the second ferrule, the second plurality of optical fibers pierce and tear the membrane cover.

Example embodiment 9: The photonic connector of embodiment 1, 2, 3, 4, 5, 6, 7 or 8, wherein the membrane cover comprises a self- healing polymer material.

Example embodiment 10: The photonic connector of embodiment 1, 2, 3, 4, 5, 6, 7, 8 or 9, wherein the membrane cover comprises a traditional polymer material.

Example embodiment 11: The photonic connector of embodiment 1, 2, 3, 4, 5, 6, 7, 8, 9 or 10, wherein the membrane cover comprises a closed cell foam material.

Example embodiment 12: The photonic connector of embodiment 1, 2, 3, 4, 5, 6, 7, 8, 9, 10 or 11, wherein the membrane cover comprises a melamine foam material.

Example embodiment 12: The photonic connector of embodiment 1, 2, 3, 4, 5, 6, 7, 8, 9, 10, 11 or 12, wherein the membrane cover membrane cover has a height of approximately 8-10 mm and a width of approximately 20-30 mm.

Example embodiment 14: A photonic connector comprises a first ferrule having a first plurality of optical fibers. A membrane cover is attached to the first ferrule and covers ends of the first plurality of optical fibers. A second ferrule has a second plurality of optical fibers, wherein once the first ferrule is mated with a second ferrule, the membrane cover is pierced by the first plurality of optical fibers, the second plurality of optical fibers, or both.

Example embodiment 15: The photonic connector of embodiment 14, wherein the first ferrule comprises a male connector and the membrane cover is attached to a front face of the first ferrule over the ends of the first plurality of optical fibers.

Example embodiment 16: The photonic connector of embodiment 14 or 15, wherein the first ferrule comprises a male connector and the first plurality of optical fibers extend past the front face sufficiently to pierce the membrane cover.

Example embodiment 17: The photonic connector of embodiment 14, wherein the first ferrule comprises a female connector having a top wall, a back wall, and a bottom wall that form a cavity in the second ferrule, wherein the membrane cover is attached to the back wall of the cavity over the ends of the first plurality of optical fibers.

Example embodiment 18: The photonic connector of embodiment 14, wherein the second ferrule comprises a female connector having a top wall, a back wall, and a bottom wall that form a cavity, wherein the membrane cover is attached to front surfaces of the top, the sides and the bottom walls over the cavity.

Example embodiment 19: The photonic connector of embodiment 18, wherein once the first ferrule is mated with the second ferrule, the second plurality of optical fibers pierce and tear the membrane cover.

Example embodiment 20: The photonic connector of embodiment 14, 15, 16, 17, 18 or 19, wherein the membrane cover comprises a self- healing polymer material.

Example embodiment 21: The photonic connector of embodiment 14, 15, 16, 17, 18, 19 or 20, wherein the membrane cover membrane cover has a height of approximately 8-10 mm and a width of approximately 20-30 mm.

Example embodiment 22: A method of fabricating a photonic connector comprises fabricating a first ferrule having a first plurality of optical fibers. A membrane cover is attached to the first ferrule to cover ends of the first plurality of optical fibers.

Example embodiment 23: The method of embodiment 22, further comprising attaching a membrane cover to the first ferrule with an adhesive membrane.

Example embodiment 24: The method of embodiment 22, further comprising attaching a membrane cover to the first ferrule with thermal welding.

Example embodiment 25: The method of embodiment 22, further comprising attaching a membrane cover to the first ferrule with a clip or press on mechanism.

**Claims**

1. A photonic connector, comprising:

   a first ferrule having a first plurality of optical fibers;
   a membrane cover attached to the first ferrule and covers ends of the first plurality of optical fibers, wherein once the first ferrule is mated with a second ferrule having a second plurality of optical fibers, the membrane cover is pierced by the first plurality of optical fibers, the second plurality of optical fibers, or both.

2. The photonic connector of claim 1, wherein the first ferrule comprises a male connector and the membrane cover is attached to a front face of the first ferrule over the ends of the first plurality of optical fibers between alignment pins.

3. The photonic connector of claim 1 or 2, wherein the first ferrule comprises a male connector and the membrane cover is attached to a front face of the first ferrule over both the ends of the first plurality of optical fibers and the alignment pins.

4. The photonic connector of claim 1, 2 or 3, wherein the first ferrule comprises a male connector and the first plurality of optical fibers extend past the front face sufficiently to pierce the membrane cover.

5. The photonic connector of claim 1, 2, 3 or 4, wherein the first ferrule comprises a male connector and the first plurality of optical fibers do not extend past the front face sufficiently to pierce the membrane cover.

6. The photonic connector of claim 1, wherein the first ferrule comprises a female connector having a top wall, a back wall, and a bottom wall that form a cavity in the first ferrule, wherein the membrane cover is attached to the back wall of the cavity over the ends of the first plurality of optical fibers.

7. The photonic connector of claim 1, wherein the first ferrule comprises a female connector having a top wall, a back wall, and a bottom wall that form a cavity, wherein the membrane cover is attached to front surfaces of the top, the sides and the bottom walls over the cavity.

8. The photonic connector of claim 7, wherein once the first ferrule is mated with the second ferrule, the second plurality of optical fibers pierce and tear the membrane cover.

9. The photonic connector of claim 1, 2, 3, 4, 5, 6, 7 or 8, wherein the membrane cover comprises a self-healing polymer material.

10. The photonic connector of claim 1, 2, 3, 4, 5, 6, 7, 8 or 9, wherein the membrane cover comprises a traditional polymer material.

11. The photonic connector of claim 1, 2, 3, 4, 5, 6, 7, 8, 9 or 10, wherein the membrane cover comprises a closed cell foam material.

12. A method of fabricating a photonic connector, the method comprising:

fabricating a first ferrule having a first plurality of optical fibers; and
attaching a membrane cover to the first ferrule to cover ends of the first plurality of optical fibers.

13. The method of claim 12, further comprising attaching a membrane cover to the first ferrule with an adhesive membrane.

14. The method of claim 12, further comprising attaching a membrane cover to the first ferrule with thermal welding.

15. The method of claim 12, further comprising attaching a membrane cover to the first ferrule with a clip or press on mechanism.

# FIG. 1A

# FIG. 1B

# FIG. 1C

<u>150</u>

# FIG. 2

300

302    306    310

304    312

Fiber A1    Fiber B1

Fiber An    Fiber Bn

308

# FIG. 3A

310

302    306

304    312

Fiber A1    Fiber B1

Fiber An    Fiber Bn

314

# FIG. 3B

302

400

306

308

# FIG. 4

500

## FIG. 5A

## FIG. 5B

302
310
306
304
312
Fiber B1
Fiber Bn
314

## FIG. 5C

310

## FIG. 5D

Fabricate a first ferrule having a first plurality of optical fibers
600

Attach a membrane cover to the first ferrule that covers ends of the
first plurality of optical fibers
602

Attach the membrane to the first ferrule with an
adhesive membrane
602A

Attach the membrane to the first ferrule with thermal
welding
602C

Attach the membrane to the first ferrule with a clip or
press on mechanism
602C

# FIG. 6

Camera

Processor
704

Communication
Chip
706

Communication
Chip
706

DRAM | DRAM

Chipset

AMP | Graphics
CPU

ROM

Touchsrceen
Controller

GPS | Compass

Motherboard
702

Antenna

Speaker

Touchscreen
Display

Battery

Computing Device
700

FIG. 7

Europäisches
Patentamt

European
Patent Office

Office européen
des brevets

# EUROPEAN SEARCH REPORT

Application Number

EP 21 19 6244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/378108 A1 (KUZNIA CHARLES B [US] ET AL) 31 December 2015 (2015-12-31) | 12 | INV. G02B6/38 |
| Y | * paragraphs [0039] – [0041] * <br> * figures 1-3,9,10 * | 1 | |
| Y | WO 2012/112343 A1 (TYCO ELECTRONICS RAYCHEM BVBA [BE]; TYCO ELECTRONICS CORP [US] ET AL.) 23 August 2012 (2012-08-23) <br> * page 4, line 12 – page 5, line 20 * <br> * page 10, line 11 – page 13, line 24 * <br> * figures * | 1 | |
| A | US 9 946 034 B1 (ESLICK JASON [US] ET AL) 17 April 2018 (2018-04-17) <br> * column 3, lines 11-22 * <br> * column 5, line 44 – column 6, line 9 * <br> * column 8, line 51 – column 10, line 2 * <br> * figures 1,2,9-13 * | 1-15 | |
| A | JP 2015 018042 A (AUTO NETWORK GIJUTSU KENKYUSHO; SUMITOMO WIRING SYSTEMS ET AL.) 29 January 2015 (2015-01-29) <br> * paragraphs [0021] – [0028] * <br> * figures * | 1-15 | TECHNICAL FIELDS SEARCHED (IPC) <br><br> G02B |
| A | JP 2014 025981 A (AUTO NETWORK GIJUTSU KENKYUSHO; SUMITOMO WIRING SYSTEMS ET AL.) 6 February 2014 (2014-02-06) <br> * paragraphs [0034] – [0044] * <br> * figures 3-9 * | 1-15 | |

The present search report has been drawn up for all claims

| Place of search | Date of completion of the search | Examiner |
|---|---|---|
| The Hague | 14 February 2022 | Kloppenburg, Martin |

## ANNEX TO THE EUROPEAN SEARCH REPORT
## ON EUROPEAN PATENT APPLICATION NO.

EP 21 19 6244

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2022

| Patent document cited in search report | | Publication date | Patent family member(s) | | Publication date |
|---|---|---|---|---|---|
| US 2015378108 | A1 | 31-12-2015 | US | 2015378108 A1 | 31-12-2015 |
| | | | US | 2018011259 A1 | 11-01-2018 |
| | | | US | 2019154926 A1 | 23-05-2019 |
| WO 2012112343 | A1 | 23-08-2012 | NONE | | |
| US 9946034 | B1 | 17-04-2018 | NONE | | |
| JP 2015018042 | A | 29-01-2015 | NONE | | |
| JP 2014025981 | A | 06-02-2014 | JP | 2014025981 A | 06-02-2014 |
| | | | WO | 2014017306 A1 | 30-01-2014 |

EPO FORM P0459

For more details about this annex : see Official Journal of the European Patent Office, No. 12/82